# FASCICULE DE BREVET EUROPEEN

(11) **EP 0 679 813 B1**
(45) Date de publication et mention de la délivrance du brevet: **14.10.1998**
(21) Numéro de dépôt: 95400794.4
(22) Date de dépôt: 10.04.1995
(51) Int. Cl.: F16B 5/00, F16B 5/02

(54) **Organe de fixation mécanique de deux éléments l'un à l'autre, notamment pour la fixation d'un carter de direction à un support de direction**
Organ zur mechanischen Befestigung von zwei Elementen aneinander, insbesondere für die Befestigung eines Lenkgetriebegehäuses an einem Lenkgetriebeträger
Mechanical fixation of two parts one to another, especially for the fixation of a steering gear casing to a steering gear support

(30) Priorité: 27.04.1994 FR 9405077
(43) Date de publication de la demande: 02.11.1995
(73) Titulaire: AUTOMOBILES PEUGEOT, 75116 Paris (FR); AUTOMOBILES CITROEN, 92200 Neuilly-sur-Seine (FR)
(72) Inventeur: Hoekman, Didier, F-77350 Le Mee sur Seine (FR)
(74) Mandataire: Robert, Jean-François

(56) Documents cités:
- EP-A- 0 062 271
- WO-A-90/05850
- DE-U- 8 515 918

## Description

La présente invention concerne un organe de fixation mécanique de deux éléments l'un à l'autre, qui s'applique de façon particulièrement avantageuse à la fixation d'un mécanisme de direction sur son support.

Dans cette application, le mécanisme de direction est traditionnellement posé sur un support faisant généralement partie du châssis du véhicule, et il est maintenu sur ce support au moyen de vis introduites dans des trous traversants du support et vissées dans des orifices taraudés du carter du mécanisme de direction, ce qui permet de plaquer ainsi ce dernier sur son support.

Une fois monté et en service, le mécanisme de direction est soumis à des efforts qui peuvent atteindre des valeurs élevées, efforts qui sont appliqués en bout de mécanisme, via les biellettes de liaison, par les roues commandées par ce mécanisme. Ces contraintes sont dirigées essentiellement suivant la plus grande dimension du carter de direction, donc selon une direction essentiellement parallèle au plan du support sur lequel est monté le mécanisme.

La configuration de montage exposée plus haut est cependant telle que l'axe des vis de fixation du carter s'étend perpendiculairement au plan du support ; il est de ce fait nécessaire, pour assurer la solidarisation du mécanisme de direction avec son support, que l'effort de serrage exercé par les vis de fixation (effort de plaquage du mécanisme de direction contre son support), multiplié par le coefficient de frottement entre mécanisme et support, soit toujours supérieur à l'effort maximal susceptible d'être appliqué en bout de mécanisme.

Dans le cas des carters de direction traditionnels en acier, compte tenu de la très grande résistance mécanique de ce matériau, le respect de cette condition ne pose pas de difficultés particulières.

En revanche, dans le cas des nouveaux mécanismes de direction avec carter en aluminium ou en alliage léger, l'effort de plaquage est limité par la valeur de pression de matage admissible par le matériau du carter, valeur très inférieure à ce qu'elle est avec un carter en acier.

Le but de la présente invention est de proposer un dispositif ou organe de fixation mécanique qui permette de pallier cette difficulté, sans qu'il soit pour autant besoin d'augmenter le nombre de points de fixation (qui est généralement limité à deux) ni de recourir à des pièces de fixation spéciales telles que brides ou colliers ; en d'autres termes, cet organe doit permettre un vissage direct du carter en aluminium sur son support de la même manière qu'avec les carters en acier traditionnels.

À cet effet, l'organe de l'invention, qui est un organe de fixation mécanique de deux éléments l'un à l'autre, notamment pour la fixation d'un carter de direction à un support de direction, cet organe comprenant des moyens, notamment à vis et écrou, pour appliquer un effort de serrage du premier élément contre le second, est caractérisé par des moyens pour augmenter le coefficient de frottement de glissement relatif en translation de ces deux éléments dans une direction perpendiculaire à la direction générale de l'effort de serrage.

Très avantageusement, les moyens de reprise d'effort comprennent une pièce essentiellement plate en un matériau plus dur que celui de chacun des deux éléments, cette pièce s'étendant entre les surfaces en vis-à-vis des deux éléments et étant pourvue sur chacune de ses deux faces de reliefs propres à s'incruster dans ces surfaces lors de l'application de l'effort de serrage, cet effort de serrage étant ajusté à une valeur suffisante pour assurer l'incrustation des reliefs mais insuffisante pour provoquer toute autre déformation plastique des éléments.

Cette pièce peut notamment être en forme de rondelle venant se placer autour de la tige d'une vis des moyens de serrage. Les reliefs peuvent être des saillies allongées orientées radialement, de préférence réparties circonférentiellement en alternant saillies tournées vers l'une des surfaces en vis-à-vis et saillies tournées vers l'autre surface.

D'autres caractéristiques et avantages de l'invention apparaîtront à la lecture de la description détaillée ci-dessous d'un exemple de mise en oeuvre, faisant référence aux dessins annexés.

La figure 1 est une vue en élévation d'un mécanisme de direction, monté sur son support.

La figure 2, qui correspond au détail repéré II sur la figure 1, illustre plus en détail la manière dont cet ensemble est assemblé, notamment avec les moyens de l'invention.

La figure 3 est une vue en perspective de la pièce de reprise d'effort selon l'invention.

La figure 4 est une coupe de cette même pièce, prise selon la ligne IV-IV de la figure 3.

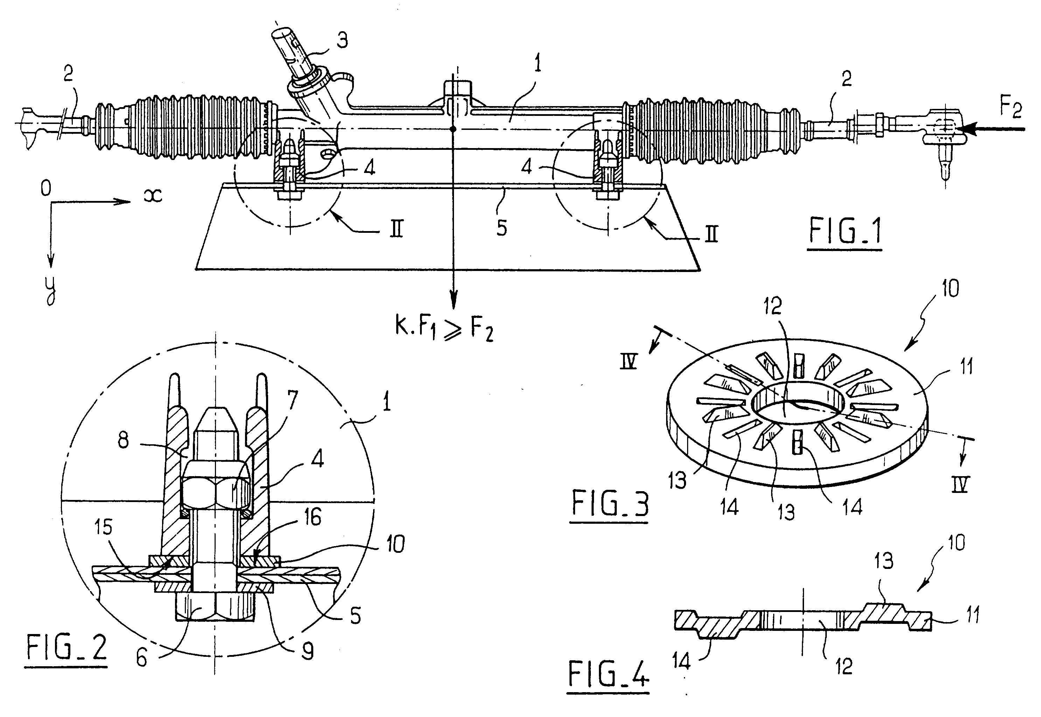

Sur la figure 1, la référence 1 désigne le carter d'un mécanisme de direction, qui est en lui-même d'un type classique, avec les extrémités 2 de la barre de commande actionnée par une colonne de direction montée sur l'embout 3.

Le carter 1 est monté par l'intermédiaire de pieds 4 sur un support 5, typiquement la traverse dite "traverse de direction" du châssis d'un véhicule automobile.

Très précisément, comme cela apparaît sur la vue agrandie de la figure 2, chaque pied 4, qui est par exemple une nervure solidaire du carter 1 (l'ensemble étant typiquement en aluminium ou en alliage léger), est fixé par une vis 6 introduite dans un orifice traversant du support 5, vis associée à un écrou 7 placé dans la cavité 8 dont les dimensions sont choisies de manière à en empêcher la rotation. Une rondelle plate 9 permet, de manière tout à fait classique, d'éviter l'endommagement du support 5 par la tête de la vis 6 au moment du serrage de cette dernière.

Le serrage de cet ensemble vis-écrou 6, 7 exerce sur le carter 1 et donc sur l'ensemble du mécanisme de direction, un effort de plaquage F1 (figure 1) orienté selon une direction Oy perpendiculaire à la direction Ox suivant laquelle s'étend le mécanisme de direction dans son ensemble.

En cours d'utilisation, le mécanisme de direction va être soumis à ses extrémités à des sollicitations importantes telles que F2 (figure 1), exercées suivant la direction Ox. Pour maintenir la solidarisation du mécanisme avec le support, il est nécessaire que l'on ait k F1 ≧ F2, k étant le coefficient de frottement de glissement relatif en translation (suivant la direction Ox) du mécanisme par rapport à son support à l'endroit des surfaces de liaison de ces deux éléments, c'est-à-dire à l'endroit du contact entre le pied 4 du carter et le support 5.

L'invention vise à permettre de réaliser un assemblage qui supprime tout risque de glissement du carter de direction sous un effort important en bout de mécanisme, avec néanmoins un serrage moindre des vis de fixation, et donc une diminution des risques de déformation permanente à cet endroit sous l'effet de contraintes excessives.

A cet effet, l'invention propose d'intercaler entre chaque pied 4 du carter 1 et le support 5 un organe 10 (figure 2) permettant d'accroître le coefficient de frottement de glissement k.

Très avantageusement, cet organe 10 est réalisé sous la forme d'une rondelle crantée 11 telle que celle illustrée, à titre d'exemple, sur les figures 3 et 4.

La rondelle 11 est en un matériau dont la dureté est supérieure à la fois à celle du pied 4 du carter 1 et à celle du support 5 afin de permettre, lors du serrage, aux crans de s'enfoncer dans chacune de ces pièces et, du fait de cette incrustation, d'accroître le coefficient de frottement de glissement relatif entre elles.

Cette rondelle 11 a par exemple la forme d'une couronne circulaire avec une ouverture centrale 12 traversante permettant de laisser passer la tige de la vis 6. Elle est pourvue sur chacune de ses faces de crans 13, 14, par exemple (mais de façon aucunement limitative) sous la forme de saillies radiales allongées réparties régulièrement suivant une circonférence. Les crans 13 font saillie d'une première face de la rondelle 11 et viennent s'incruster, au moment du serrage, dans la face en vis-à-vis 15 du pied 4 du carter 1, tandis que les crans 14 font saillie de la face opposée de la rondelle 11 et viennent s'incruster, au moment du serrage, dans la surface en vis-à-vis 16 du support 5.

On notera que le rôle de la rondelle crantée 11 est d'augmenter le coefficient de frottement de glissement relatif en translation (c'est-à-dire selon l'axe Ox ou, plus généralement, dans un plan perpendiculaire à l'axe Oy) il ne s'agit aucunement, comme dans le cas des rondelles crantées ou rondelles à dents traditionnelles, d'obtenir un effet d'anti-rotation ou de freinage d'un écrou ou d'une tête de vis par rapport à une pièce à assembler, le freinage étant dans ce dernier cas réalisé par une augmentation du coefficient de frottement en rotation autour d'un axe correspondant à l'axe de la rondelle. À l'opposé, dans l'invention, la rondelle a pour effet d'augmenter le frottement de glissement relatif dans une direction perpendiculaire à l'axe de la rondelle.

La rondelle du mode de réalisation illustré n'est d'ailleurs qu'une configuration particulière du moyen de l'invention, choisie compte tenu de sa commodité de réalisation et de mise en place.

Cette forme particulière n'est aucunement limitative, et le moyen de l'invention peut être également réalisé en forme de plaquette circulaire, ovale, carrée, rectangulaire, avec ou sans trou de passage de la vis, etc.

De même, la configuration et le dimensionnement des saillies peuvent être différents de ceux du mode de réalisation illustré, dès lors que l'on peut obtenir l'augmentation du coefficient de frottement nécessaire compte tenu des efforts susceptibles d'être appliqués, sans risque d'arrachage de la matière du carter ni de celle du support lorsque le mécanisme de direction est soumis à l'effort maximum F2 qu'il est susceptible de recevoir.

De la même façon, la tension des vis 6, qui est de préférence ajustée au moyen d'une clé dynamométrique, doit être suffisante pour incruster complètement les saillies 13 et 14 des rondelles 10 au moment du montage du mécanisme, sans pour autant exercer sur les faces 15 et 16 en contact avec la rondelle 10 de contraintes de matage supérieures à la limite admissible pour le matériau du carter et celui du support.

## Revendications

1. Un organe de fixation mécanique de deux éléments l'un à l'autre, notamment pour la fixation d'un carter de direction (1) sur un support de direction (5), cet organe comprenant des moyens, notamment à vis (6) et écrou (7), pour appliquer un effort de serrage (F1) du premier élément contre le second, caractérisé en ce qu'il comporte des moyens pour augmenter le coefficient (k) de frottement de glissement relatif en translation de ces deux éléments dans une direction (Ox) perpendiculaire à la direction générale (Oy) de l'effort de serrage.

2. L'organe de la revendication 1 dans lequel lesdits moyens pour augmenter le coefficient (k) de frottement de glissement comprennent une pièce essentiellement plate (10) en un matériau plus dur que le matériau constitutif aussi bien de l'un que de l'autre élément, cette pièce s'étendant entre les surface en vis-à-vis (15,16) des deux éléments et étant pourvue sur chacune de ses deux faces de reliefs propres à s'incruster dans ces surfaces lors de l'application de l'effort de serrage.

3. L'organe de la revendication 2, dans lequel la pièce essentiellement plate est en forme de rondelle (11) venant se placer autour de la tige d'une vis (6) des moyens de serrage.

4. L'organe de la revendication 3, dans lequel les reliefs sont des saillies allongées (13,14) orientées radialement.

5. L'organe de la revendication 4, dans lequel les saillies sont réparties circonférentiellement en alternant saillies (13) tournées ver l'une (15) des surfaces en vis-à-vis et saillies (14) tournées vers l'autre (16) surface.

## Patentansprüche

1. Organ zur mechanischen Befestigung von zwei Elementen aneinander, insbesondere für die Befestigung eines Lenkgetriebegehäuses (1) an einem Lenkgetriebeträger (5), wobei dieses Organ Mittel, insbesondere aus Schraube (6) und Schraubenmutter (7) aufweist, um eine Klemmkraft (F1) von dem ersten Element auf das zweite Element zu übertragen, dadurch gekennzeichnet, daß es Mittel aufweist, um den relativen Gleitreibungskoeffizienten (k) bei Verschiebung (Ox) dieser beiden Elemente in einer Richtung senkrecht zur allgemeinen Richtung (Oy) der Klemmkraft zu vergrößern.

2. Organ nach Anspruch 1, wobei die Mittel zur Erhöhung des Gleitreibungskoeffizienten (k) ein im wesentlichen flaches Teil (10) aus einem härteren Material als sowohl das eine als auch das andere Element bildende Material, aufweisen, wobei sich dieses Teil zwischen die einander gegenüberliegenden Oberflächen (15;16) der beiden Elemente erstreckt und auf jeder seiner beiden Seiten mit Erhöhungen versehen ist, die geeignet sind, sich in die Oberflächen bei Übertragung der Klemmkraft einzudrücken.

3. Organ nach Anspruch 2, wobei das im wesentlichen flache Teil in Form einer Scheibe (11) ausgebildet ist, die sich um den Schaft einer Schraube (6) der Klemmeinrichtungen herum erstreckt.

4. Organ nach Anspruch 3, wobei die Erhöhungen längliche Vorsprünge (13; 14) sind, die kreisförmig angeordnet sind.

5. Organ nach Anspruch 4, wobei die Vorsprünge am Umfang verteilt angeordnet sind, wobei sich die zur einen (15) der gegenüberliegenden Oberflächen gerichteten Vorsprünge (13) mit den zur anderen (16) Oberfläche gerichteten Vorsprüngen (14) abwechseln.

## Claims

1. A member for mechanically fixing two elements to one another, particularly for fixing a steering gear casing (1) to a steering gear support (5), this member comprising means, particularly of screw (6) and nut (7) type, to apply a stress (F1) for tightening the first element against the second, characterised in that it comprises means for increasing the coefficient (k) of relative sliding friction in translation of these two elements in a direction (Ox) perpendicular to the general direction (Oy) of the tightening stress.

2. The member of Claim 1 in which said means for increasing the coefficient (k) of sliding friction comprise an essentially flat part (10) made of a material that is harder than the material constituting both the one and the other element, this part extending between the opposite surfaces (15, 16) of the two elements and being provided on each of its two faces with reliefs capable of becoming embedded in these surfaces when the tightening stress is applied.

3. The member of Claim 2, in which the essentially flat part is in the form of a washer (11) placed around the stem of a screw (6) of the tightening means.

4. The member of Claim 3, in which the reliefs are elongated, radially oriented projections (13, 14).

5. The member of Claim 4, in which the projections are distributed circumferentially in alternating projections (13) facing one (15) of the opposite surfaces and projections (14) facing the other (16) surface.
